# EUROPÄISCHE PATENTSCHRIFT

(11) **EP 3 868 576 B1**
(45) Veröffentlichungstag und Bekanntmachung des Hinweises auf die Patenterteilung: **23.04.2025**
(21) Anmeldenummer: 20212404.6
(22) Anmeldetag: 08.12.2020
(51) Int. Cl.: B60C 11/16

(54) **SPIKE UND FAHRZEUGREIFEN MIT IM LAUFSTREIFEN EINGESETZTEN SPIKES**
SPIKE AND VEHICLE TYRES WITH SPIKES INSERTED IN THE TREAD
CRAMPON ET PNEUS DE VÉHICULE POURVU DE CRAMPONS INSÉRÉS DANS LA BANDE DE ROULEMENT

(30) Priorität: 24.02.2020 DE 102020202312
(43) Veröffentlichungstag der Anmeldung: 25.08.2021
(73) Patentinhaber: Continental Reifen Deutschland GmbH, 30175 Hannover (DE)
(72) Erfinder: Pang-Jian-Xiang, Edwin, 30419 Hannover (DE); Gleeson, Ruaidhri, 30419 Hannover (DE); Spechtmeyer, Torben, 30419 Hannover (DE)
(74) Vertreter: Continental Corporation

(56) Entgegenhaltungen:
- DE-A1- 102012 112 658
- US-A- 3 532 148
- DATABASE INSPEC [online] THE INSTITUTION OF ELECTRICAL ENGINEERS, STEVENAGE, GB; June 2015 (2015-06-01), VIKRAM K A ET AL: "Assessment of surface roughness and MRR while machining brass with HSS tool and carbide inserts", XP002802540, Database accession no. 15907943
- VIKRAM K ARUN, RATNAM CH, NARAYANA K SANKARA, BEN B SATISH: "Assessment of surface roughness and MRR while machining brass with HSS tooland carbide inserts", INDIAN JOURNAL OF ENGINEERING & MATERIALS SCIENCES, vol. 22, no. 3, June 2015 (2015-06-01), NISCAIR-CSIR, India, pages 321 - 330, XP002802630, ISSN: 0971-4588
- DATABASE COMPENDEX [online] ENGINEERING INFORMATION, INC., NEW YORK, NY, US; 2009, PISKA M ET AL: "On the structural integrity of the nano-PVD coatings applied on cutting tools", XP002802541, Database accession no. E20142217776119
- PISKA M ET AL: "On the structural integrity of the nano-PVD coatings applied on cutting tools", DAMAGE AND FRACTURE MECHANICS: FAILURE ANALYSIS OF ENGINEERING MATERIALS AND STRUCTURES - DAMAGE AND FRACTURE MECHANICS: FAILURE ANALYSIS OF ENGINEERING MATERIALS AND STRUCTURES 2009 KLUWER ACADEMIC PUBLISHERS NLD, 1 June 2008 (2008-06-01), pages 195 - 204, DOI: 10.1007/978-90-481-2669-9_20
- ANONYM: "Rauheit", XP002802542, Retrieved from the Internet <URL:https://de.wikipedia.org/wiki/Rauheit> [retrieved on 20210330]
- ANONYM: "EN ISO 25178", 30 March 2021 (2021-03-30), Retrieved from the Internet <URL:https://de.wikipedia.org/wiki/EN_ISO_25178> [retrieved on 20210330]

## Beschreibung

Die Erfindung betrifft einen Spike, mit welchem der Laufstreifen vorzugsweise eines Fahrzeugreifens zu bestücken ist, mit einem Spikekörper und einem Spikepin, wobei der Spikepin in den Spikekörper derart eingesetzt ist, dass ein Ende des Spikepins über den Spikekörper bzw. im in den Laufstreifen bestückten Zustand über die Laufstreifenoberfläche hinaussteht. Die Erfindung betrifft darüber hinaus auch einen Fahrzeugreifen und einen Schuh mit in den Laufstreifen eingesetzten erfindungsgemäßen Spikes.

Spikes und Fahrzeugreifen, deren Laufstreifen mit Spikes bestückt sind, sind dem Fachmann hinreichend bekannt. Jeder Spike wird in ein gesondertes, vorgefertigtes Spikeloch im Laufstreifen des Fahrzeugreifens eingesetzt und üblicherweise durch seinen in das Spikeloch eingepressten, eingeklebten oder einvulkanisierten Spikekörper im Spikeloch gehalten. In den Spikekörper selber ist der Spikepin eingesetzt. Der Spikepin erstreckt sich mit seinem einen Ende, der sogenannten Spikespitze, über das Spikeloch und somit über die Laufstreifenoberfläche hinaus und kommt hierdurch beim Abrollen des Reifens in den Eingriff mit der winterlichen Fahrbahn. Üblicherweise hat die Spikespitze eine abgeflachte Stirnseite.

Aus der DE 10 2012 112 658 A1 ist ein Spikepin aus Hartmetallen, die aus einer pulvermetallurgischen Mischung gesintert wurden, bekannt.

Zur Oberflächenrauheit von Metallkörpern ist Folgendes bekannt:
In Vikram et al. "Assessment of surface roughness and MMR while machining brass with HSS tool and carbides inserts", Indian Journal of Engineering & Materials Sciences, Vol. 22, June 2015, Seiten 321 - 330, wird aufgezeigt, dass die mittlere Oberflächenrauheit Rₐ von Messing durch Drehen mit Hartmetallwerkzeugen bis auf 1,42 µm reduziert werden kann.

In Piska et al. "On the structural Integrity of the Nano-PVD Coatings on Cutting Tools" T. Boukharouba et al. Damage and Fracture Mechanics: Failure Analysis of Engineering Materials and Structures, 2009, Seiten 195 - 204, wurde beim Bohren von Kohlenstoffstahl mit TiN-hartbeschichteten Schneidwerkzeugen eine mittlere Oberflächenrauheit Rₐ von 1,00 µm bis 1,50 µm erreicht.

Hierbei wird die mittlere Oberflächenrauheit gemäß DIN EN ISO 25178 bestimmt.

Einige mit verschiedenen Fertigungsverfahren erreichbare mittlere Rauheiten sind dem Wikipedia-Eintrag zu "Oberflächengüte" entnehmbar.

Die US 3 532 148 A offenbart einen Spike aus gesintertem Hartmetall, welcher gemäß einem ersten Beispiel 64% Titancarbid, 18% Molybdäncarbid und 15% Nickel, gemäß einem zweiten Beispiel 60% Titancarbid, 12% Vanadiumcarbid, 9% Niobiumcarbid und 5% Nickel sowie gemäß einem dritten Beispiel 71% Titancarbid, 3% Molybdäncarbid und 17% Nickel enthält. Der Spike soll eine gute Bruchfestigkeit, eine hohe Abriebbeständigkeit und ein geringes Gewicht aufweisen.

Der für den Eisgriff wichtige Überstand des Spikepins, d. h. der Erstreckungsbereich, mit welcher sich die Spikespitze über die Oberfläche des Spikelochs bzw. die Laufstreifenoberfläche hinaus erstreckt, wird üblicherweise zur Erzielung eines optimalen Eisgriffs auf eine Erstreckungslänge von 1 bis 1,5 mm eingestellt. Beim Antrieb bzw. Bremsen kommt von der Spikespitze zunächst die hintere bzw. vordere Stirnseitenkante mit der vereisten Fahrbahnoberfläche in Berührung, greift in das Eis ein, überträgt einen Großteil der Kräfte über die Stirnseite der Spikespitze und rollt über die gegenüberliegende Stirnseitenkante ab.

Der Spikepin selber weist im Stand der Technik eine "glatte" Oberfläche auf.

Der Eisgriff, auch 'Eisperformance' genannt, ist eine wichtige Kenngröße eines Winterreifens und ist für die Fahrsicherheit hoch relevant. Daher ist man bestrebt, die Eisperformance zu verbessern.

Der Erfindung liegt daher die Aufgabe zu Grunde, einen Spike und einen mit diesen Spikes bestückten Fahrzeugreifen zur Verfügung zu stellen, deren Eisperformance verbessert ist.

Gelöst wird die gestellte Aufgabe in Bezug auf den Spike erfindungsgemäß dadurch, dass der Spikepin eine Oberfläche aufweist, welche zumindest teilweise mit einer mittleren Rauheit Rₐ in einem Bereich von 3 µm bis 12 µm versehen ist.

Der Spikepin, welcher in die winterliche Fahrbahn eingreift, ist erfindungsgemäß zumindest bereichsweise mit einer mittleren Rauheit Rₐ versehen, wodurch eine stärkere Verzahnung zwischen Fahrbahn und Spikepin erhalten ist. Hierdurch ist es ermöglicht, höhere Brems- und Antriebskräfte, insbesondere auf Eis, zu übertragen. Es ist ein höherer Reibungskoeffizient erhalten. Die Eisperformance ist verbessert.

Vorteilhaft ist es, wenn die mittlere Rauheit Rₐ in einem Bereich von 5 µm bis 10µm liegt. Diese Rauheit hat sich überraschenderweise als besonders wirkungsvoll für die Verbesserung der Eisperformance erwiesen.

Zweckmäßig ist es, wenn zumindest die Stirnseite des über den Spikekörper hinausstehenden Endes des Spikepins (entspricht der 'Spikespitze') eine Oberfläche aufweist, welche vollständig mit der vorgenannten Rauheit versehen ist. Die Stirnseite des Spikekörpers ist im Kontakt mit der vereisten Fahrbahnoberfläche insbesondere für die Übertragung der Antriebs- und Bremskräfte verantwortlich. Daher ist es für die Verbesserung der Eisperformance wesentlich, zumindest die Stirnseite mit der vorgenannten Rauheit zu versehen.

In einer weiteren Ausführung der Erfindung ist die gesamte Oberfläche des über den Spikekörper hinausstehenden Endes des Spikepins mit der Rauheit versehen. Hierdurch ist die Fläche des Spikepins, welche sich mit der Oberfläche der winterlichen Fahrbahn verzahnt, weiter erhöht, wodurch die Eisperformance weiter verbessert ist.

In einer anderen Ausführung der Erfindung weist der gesamte Spikepin -also auch der Teil des Spikepins, welcher in den Spikekörper eingesetzt ist - eine Oberfläche auf, welche vollständig mit der Rauheit versehen ist. Zwar ist die raue Oberfläche des Spikepins, welche in dem Spikekörper angeordnet ist, nicht für die Eisperformance wirksam, jedoch ist es für die Herstellung des Spikepins mit rauer Oberfläche einfach, den gesamten Spikepin mit der Rauheit zu versehen.

Zweckmäßig ist es, wenn der Spikepin aus Metall, vorzugsweise aus Wolfram, einem Hartmetall oder aus einer Metalllegierung besteht. Diese Werkstoffe sind als Spikepin geeignet und zudem kostengünstig mit einer rauen Oberfläche zu versehen.

Die Erfindung betrifft ferner einen Fahrzeugreifen mit einem Laufstreifen mit Spikelöchern, in welche erfindungsgemäß ausgeführte Spikes eingesetzt sind. Der Fahrzeugreifen ist vorteilhafterweise ein Fahrzeugluftreifen für einen PKW, für einen Van oder für ein Nutzfahrzeug.

Die Erfindung betrifft ferner einen Schuh mit einem Laufstreifen mit Spikelöchern, in welche erfindungsgemäße Spikes eingesetzt sind.

Weitere Merkmale, Vorteile und Einzelheiten der Erfindung werden nun anhand der schematischen Zeichnung näher beschrieben:
Die Fig. 1 zeigt den Querschnitt eines erfindungsgemäßen Spikes, welcher in ein Spikeloch im Laufstreifen eines Fahrzeugreifens eingesetzt ist;
die Fig. 2 zeigt eine gescannte photographische Aufsicht auf einen Spikepin, dessen Oberfläche mit der Rauheit versehen ist.

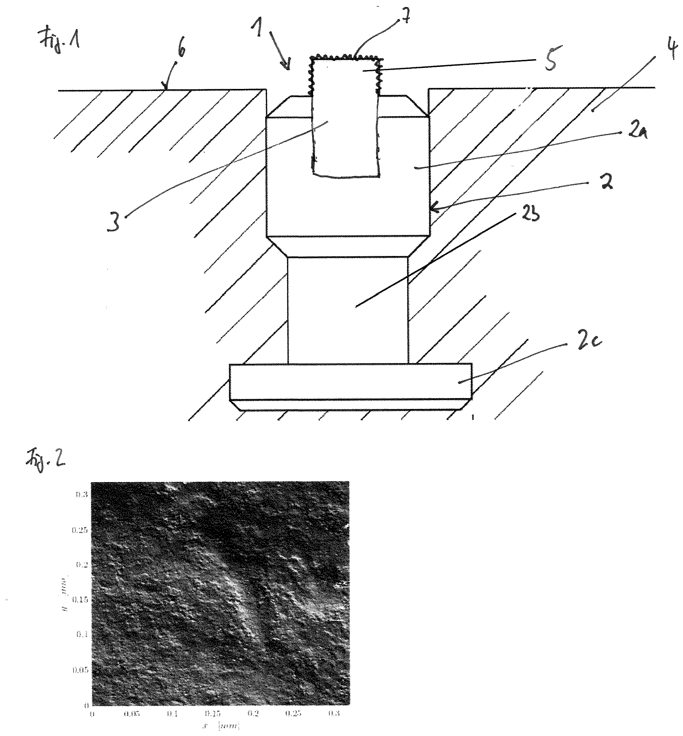

Die Fig. 1 zeigt eine Ausführungsvariante eines üblichen Spikes 1 mit einem Spikekörper 2 und einem Spikepin 3, welcher in ein Spikeloch im Laufstreifen 4 eines Fahrzeugreifens eingesetzt ist. Der Spikekörper 2 weist einen Oberflansch 2a, einen taillierten Mittelteil 2b und einen Fußflansch 2c auf. Der Oberflansch 2a ist in bekannter Weise mit einem Pinloch versehen ist, in welches der Spikepin 3 eingesetzt ist. Ein Ende des Spikepins 5 steht über den Spikekörper 2 bzw. im in den Laufstreifen 4 bestückten Zustand über die Laufstreifenoberfläche 6 hinaus und wird auch Spikespitze genannt.

Der Spikekörper 2 kann rotationssymmetrisch oder in an sich bekannter Weise länglich ausgeführt sein. Der Spikepin 3 selbst kann ebenfalls rotationssymmetrisch ausgeführt sein oder eine längliche Form aufweisen und sich entlang seiner Längsachse beispielsweise verjüngen. Der Spikepin 3 weist eine Stirnseite 7 auf, die unter Kantenbildung abgeflacht ist. Die Spikes 1 werden in Spikelöcher, welche während der Vulkanisation des Reifens in einer Heizform im Laufstreifen 4 geformt werden, im Gummimaterial eines Laufstreifens 4 des Fahrzeugluftreifens unter Pressung eingebracht.

Der Spikekörper 2 besteht aus Aluminium oder Stahl und wird üblicherweise durch Drehen, Kaltfließpressen oder Gesenkschmieden hergestellt. Zur Herstellung der Spikekörper 2 werden insbesondere aus Gründen der Verarbeitbarkeit bestimmte Materialeigenschaften aufweisende Stahllegierungen verwendet. Der Spikepin 3 besteht aus Wolfram. Der Spikepin 3 hat seine Gestaltung durch eine entsprechende Negativform erhalten, deren Formwände die entsprechende Negativrauheit aufweist.

Zur Erhöhung der Eisperformance weist zumindest die Stirnseite 7 des über den Spikekörper 2 hinausstehenden Endes des Spikepins 5 eine Oberfläche auf, welche vollständig mit einer mittlere Rauheit Rₐ in einem Bereich von 5 µm bis 10µm versehen ist. Hier in der Fig. 1 weist die gesamte Oberfläche des über den Spikekörper 2 hinausstehenden Endes des Spikepins 5 die Rauheit (zur Verdeutlichung gezahnt dargestellt) auf.

Die Fig. 2 zeigt eine zur Veranschaulichung der rauen Oberfläche des Spikepins 3 eine photographische Aufsicht auf einen Bereich des Spikepins, dessen Oberfläche mit der Rauheit Rₐ in einem Bereich von 5 µm bis 10 µm versehen ist.

### Bezugsziffernliste

- 1: Spike
- 2a: Oberflansch
- 2b: Mittelteil
- 2c: Fußflansch
- 2: Spikekörper
- 3: Spikepin
- 4: Laufstreifen
- 5: Ende des Spikepins / Spikepinspitze
- 6: Laufstreifenoberfläche
- 7: Stirnseite der Spikespitze

## Patentansprüche

1. Spike (1), mit welchem der Laufstreifen (4) vorzugsweise eines Fahrzeugreifens zu bestücken ist, mit einem Spikekörper (2) und einem Spikepin (3), wobei der Spikepin (3) in den Spikekörper (2) derart eingesetzt ist, dass ein Ende des Spikepins (5) über den Spikekörper (2) bzw. im in den Laufstreifen (4) bestückten Zustand über die Laufstreifenoberfläche (6) hinaussteht,
**dadurch gekennzeichnet,**
**dass** der Spikepin (3) eine Oberfläche aufweist, welche zumindest teilweise mit einer mittleren Rauheit Rₐ in einem Bereich von 3 µm bis 12 µm versehen ist.

2. Spike (1) nach Anspruch 1, **dadurch gekennzeichnet, dass** die mittlere Rauheit Rₐ in einem Bereich von 5 µm bis 10µm liegt.

3. Spike (1) nach Anspruch 1 oder 2, **dadurch gekennzeichnet, dass** zumindest die Stirnseite (7) des über den Spikekörper (2) hinausstehenden Endes des Spikepins (5) eine Oberfläche aufweist, welche vollständig mit der Rauheit Rₐ versehen ist.

4. Spike (1) nach einem der Ansprüche 1 bis 3, **dadurch gekennzeichnet, dass** die gesamte Oberfläche des über den Spikekörper (2) hinausstehenden Endes des Spikepins (5) mit der Rauheit Rₐ versehen ist.

5. Spike (1) nach einem der Ansprüche 1 bis 3, **dadurch gekennzeichnet, dass** der gesamte Spikepin (3) eine Oberfläche aufweist, welche vollständig mit der Rauheit Rₐ versehen ist.

6. Spike (1) nach einem der Ansprüche 1 bis 4 oder 5, **dadurch gekennzeichnet, dass** der Spikepin (3) aus Metall, vorzugsweise aus Wolfram, einem Hartmetall oder aus einer Metalllegierung besteht.

7. Fahrzeugreifen mit einem Laufstreifen (4) mit Spikelöchern, in welche Spikes (1) gemäß einem oder mehreren der Ansprüche 1 bis 6 eingesetzt sind.

8. Fahrzeugreifen nach Anspruch 7, **dadurch gekennzeichnet, dass** der Fahrzeugreifen ein Fahrzeugluftreifen für einen PKW, für einen Van oder für ein Nutzfahrzeug ist.

9. Schuh mit einem Laufstreifen mit Spikelöchern, in welche Spikes (1) gemäß einem oder mehreren der Ansprüche 1 bis 6 eingesetzt sind.

## Claims

1. Spike (1), with which the tread (4) preferably of a vehicle tyre is to be fitted, comprising a spike body (2) and a spike pin (3), wherein the spike pin (3) is inserted in the spike body (2) in such a way that one end of the spike pin (5) protrudes beyond the spike body (2) or, when it is fitted in the tread (4), protrudes beyond the tread surface (6),
**characterized**
**in that** the spike pin (3) has a surface which is at least partially provided with an average roughness Rₐ in a range from 3 µm to 12 µm.

2. Spike (1) according to Claim 1, **characterized in that** the average roughness Rₐ lies in a range from 5 µm to 10 µm.

3. Spike (1) according to Claim 1 or 2, **characterized in that** at least the end side (7) of that end of the spike pin (5) which protrudes beyond the spike body (2) has a surface which is completely provided with the roughness Rₐ.

4. Spike (1) according to one of Claims 1 to 3, **characterized in that** the entire surface of that end of the spike pin (5) which protrudes beyond the spike body (2) is provided with the roughness Rₐ.

5. Spike (1) according to one of Claims 1 to 3, **characterized in that** the entire spike pin (3) has a surface which is completely provided with the roughness Rₐ.

6. Spike (1) according to one of Claims 1 to 4 or 5, **characterized in that** the spike pin (3) consists of metal, preferably of tungsten, a hard metal or of a metal alloy.

7. Vehicle tyre with a tread (4) having spike holes in which spikes (1) according to one or more of Claims 1 to 6 are inserted.

8. Vehicle tyre according to Claim 7, **characterized in that** the vehicle tyre is a pneumatic vehicle tyre for a car, for a van or for a utility vehicle.

9. Shoe with a tread having spike holes in which spikes (1) according to one or more of Claims 1 to 6 are inserted.

## Revendications

1. Crampon (1), avec lequel la bande de roulement (4), de préférence d'un pneu de véhicule, doit être équipée, avec un corps de crampon (2) et une broche de crampon (3), la broche de crampon (3) étant insérée dans le corps de crampon (2) de telle sorte qu'une extrémité de la broche de crampon (5) dépasse du corps de crampon (2) ou, à l'état équipé dans la bande de roulement (4), dépasse de la surface de la bande de roulement (6),
**caractérisé en ce que**
la broche de crampon (3) présente une surface qui est pourvue au moins partiellement d'une rugosité moyenne Rₐ dans une plage de 3 µm à 12 µm.

2. Crampon (1) selon la revendication 1, **caractérisé en ce que** la rugosité moyenne Rₐ se situe dans une plage de 5 µm à 10 µm.

3. Crampon (1) selon la revendication 1 ou 2, **caractérisé en ce qu'**au moins le côté frontal (7) de l'extrémité de la broche de crampon (5) dépassant du corps du crampon (2) présente une surface qui est entièrement pourvue de la rugosité Rₐ.

4. Crampon (1) selon l'une quelconque des revendications 1 à 3, **caractérisé en ce que** toute la surface de l'extrémité de la broche de crampon (5) dépassant du corps de crampon (2) est pourvue de la rugosité Rₐ.

5. Crampon (1) selon l'une quelconque des revendications 1 à 3, **caractérisé en ce que** l'ensemble de la broche de crampon (3) présente une surface qui est entièrement pourvue de la rugosité Rₐ.

6. Crampon (1) selon l'une quelconque des revendications 1 à 4 ou 5, **caractérisé en ce que** la broche de crampon (3) est constituée de métal, de préférence de tungstène, d'un métal dur ou d'un alliage de métaux.

7. Pneumatique de véhicule avec une bande de roulement (4) avec des trous pour crampons dans lesquels sont insérés des crampons (1) selon une ou plusieurs des revendications 1 à 6.

8. Pneumatique de véhicule selon la revendication 7, **caractérisé en ce que** le pneumatique de véhicule est un pneumatique de véhicule pour une voiture particulière, pour une camionnette ou pour un véhicule utilitaire.

9. Chaussure avec une bande de roulement avec des trous pour crampons dans lesquels sont insérés des crampons (1) selon une ou plusieurs des revendications 1 à 6.
